# EUROPEAN PATENT APPLICATION

(11) **EP 1 206 157 A2**
(43) Date of publication of application: **15.05.2002**
(21) Application number: 01660203.9
(22) Date of filing: 05.11.2001
(51) Int. Cl.: H04Q 7/38

(54) **Method for identification**

(30) Priority: 10.11.2000 FI 20002466
(71) Applicant: Nokia Corporation, 02150 Espoo (FI)
(72) Inventor: Talvitie, Olli, 33230 Tampere (FI)
(74) Representative: Pursiainen, Timo Pekka

(57) **Abstract**

The invention relates to a method for performing authentication in a communication device (1), in which identification data is stored in connection with the communication device. In the method, the authentication is divided in at least two authentication steps, wherein in the first authentication step, at least one security inquiry containing identification data of the communication device (1) is transmitted to the communication device (1). In the communication device (1), said identification data contained in the security inquiry is examined to find out if the identification data matches with the identification data stored in the communication device (1). If the comparison shows that the identification data do not match, a time control is started, wherein the processing of the next security inquiry message to be transmitted to the communication device (1) is started in the communication device (1) after the expiry of said time control. The second identification step is only taken if the comparison shows that the identification data match.

## Description

The present invention relates to a method for authentication of a communication device as presented in the preamble of the appended claim 1. The invention also relates to a communication device according to the preamble of the appended claim 6, a communication system according to the preamble of the appended claim 10, as well as an identification card according to the preamble of the appended claim 13.

In present mobile communication systems, such as the GSM system, a so-called SIM card (subscriber identity module), on which user-specific information is stored, is used as an identification card for the authentication of wireless communication devices complying with the mobile communication system. In the mobile communication system, this information contained in the SIM card is used to identify wireless communication devices and to prevent abuse.

In connection with turning on of a wireless communication device, the wireless communication device performs user identification. For the user identification, the user must give his/her personal identification number, if the user has switched on such a function. After this, the wireless communication device transfers the personal identification number entered by the user to the SIM card where the personal identification number is checked. If the personal identification number matches with the data stored on the SIM card, the wireless communication device can be set on. After this, the wireless communication device attempts to set up a connection with the mobile communication network to log in. After the login, the wireless communication device can be used *e.g.* to receive incoming calls and to make calls. To allocate debiting and other data to the correct wireless communication device and, on the other hand, to prevent abuse, user identification is performed in connection with the login. For example in the GSM mobile communication system, the user identification is implemented in such a way that the mobile communication network transmits a random number (RAND) to the wireless communication device which receives it. In the wireless communication device, this received random number is transferred to the SIM card which starts the identification functions.

Thus, the SIM card applies the received random number as well as a calculation algorithm stored on the SIM card and a user-specific encryption key to calculate a reference number. After this, the SIM card transfers the calculated reference number to the wireless communication device which transmits it further to the mobile communication network. The algorithm used for the identification as well as the user-specific encryption key are known to the mobile communication network. Thus, the mobile communication network performs a corresponding calculation of the reference number by using said random number, encryption key and algorithm. Thus, the reference number calculated in the mobile communication network and the one transmitted by the wireless communication device should be identical, if all the basic data used in the calculation are the same. On the basis of this comparison, the mobile communication network can determine if the wireless communication device was identified or not.

Since the encryption key is not transmitted in a wireless manner on the radio channel at any stage of the login, it is very difficult to determine the correct encryption key by examining the signalling between the wireless communication device and the mobile communication network. However, with a significant increase in the data processing capacity of data processors, it is possible that the encryption key can be found out for example in the following way. Using an artificial network or a corresponding apparatus implementing the functions of the mobile communication network, requests to set up a connection are transmitted to the wireless communication device, wherein the wireless communication device assumes that the contact was taken from a normal mobile communication network. After this, the artificial network is used to transmit to the SIM card of the wireless communication device a large number of requests which are replied by the SIM card. In this way, it is possible to find out the identity of the SIM card. After this, a copy can be made of the SIM card. All the above-mentioned functions are invisible to the user of the wireless communication device, wherein the user of the wireless communication device is not necessarily even aware of such a risk of copying. Such a counterfeit SIM card can then be used in any wireless communication device of the mobile communication system, thereby causing extra call costs to the authentic user. Such a risk of copying of a SIM card also causes problems to the operator of the mobile communication system.

International patent application WO 00/24218 presents a method and a system for user identification, in which the aim is to prevent the determination of the data of the SIM card by means of massive inquiries. The publication presents that, in addition to the normal login operations, a random number is transmitted from the wireless communication device to the mobile communication network. After this, a reference number is calculated in the mobile communication network and transmitted to the wireless communication device. A reference number is also calculated in the wireless communication device on the basis of said random number. After this, the wireless communication device performs a comparison of the reference number transmitted by the mobile communication network and the reference number calculated from the random number by the SIM card. If the reference numbers are identical, it is determined that the mobile communication network is a real mobile communication network, not an artificial network. If the wireless communication device does not receive a response from the mobile communication network within a predetermined time, the wireless communication device will restart the identification process. Carrying out of this identification process is attempted again and again as long as the mobile communication network responds or a predetermined number of attempts has been reached. After this, the SIM card will lock itself, that is, it will no longer respond to inquiries transmitted to it. This presented system has *e.g.* the disadvantage that in a situation in which an artificial network is used instead of a real mobile communication network in an attempt to find out the identification data of the SIM card, the SIM card will, in practice, be locked if the artificial network does not succeed in determining the identification data of the SIM card before that. The locking of the SIM card is inconvenient, particularly for the authentic user of the wireless communication device, because he/she is not even aware of such inquiries by an artificial network and cannot affect the locking of the SIM card in any way either.

It is an aim of the present invention to provide an authentication method in which undesired identification attempts can be prevented more efficiently than when using systems of prior art. The invention is based on the idea that the functions related to the authentication of the identification card, such as a SIM card, are divided into two blocks, wherein the second authentication block operates according to the present practice and the first authentication block operates preferably in connection with login of the communication device. This first authentication block attempts to slow down the login process, particularly in the above-mentioned massive inquiry situations. Thus, in the method according to an advantageous embodiment of the invention, two kinds of inquiries are addressed to the identification card: normal inquiries and security inquiries. Security inquiries are primarily made when the communication device is logging in the network. The security inquiries are processed in the first authentication block, and after an unsuccessful inquiry, the operation interval of the first authentication block is spaced out. The method according to the invention is primarily characterized in what will be presented in the characterizing part of the appended claim 1. The communication device according to the invention is primarily characterized in what will be presented in the characterizing part of the appended claim 6. The communication system according to the invention is primarily characterized in what will be presented in the characterizing part of the appended claim 10. Further, the identification card according to the invention is primarily characterized in what will be presented in the characterizing part of the appended claim 13.

By means of the present invention, considerable advantages are achieved when compared to methods and systems of prior art. Applying the method of the invention, it is possible to detect unjustified inquires made through an artificial network or the like and to delay the interval of the inquiries so long that the time used for identification is delayed, wherein it is almost impossible to find out the password. Furthermore, the user of the communication device can be notified of a possible attempt to trespass in the communication device by means of an artificial network. In this way, it is possible to prevent pirate copying of the identification card and to increase the reliability and safe usage of the communication system.

In the following, the invention will be described in more detail with reference to the appended drawings, in which
- Fig. 1: shows, in a simplified chart, a mobile communication system in which the invention can be advantageously applied,
- Fig. 2: shows a wireless communication device according to a preferred embodiment of the invention in a simplified block chart,
- Fig. 3: shows a SIM card in a simplified block chart, and
- Fig. 4: shows the method according to a preferred embodiment of the invention in a simplifiedflow chart.

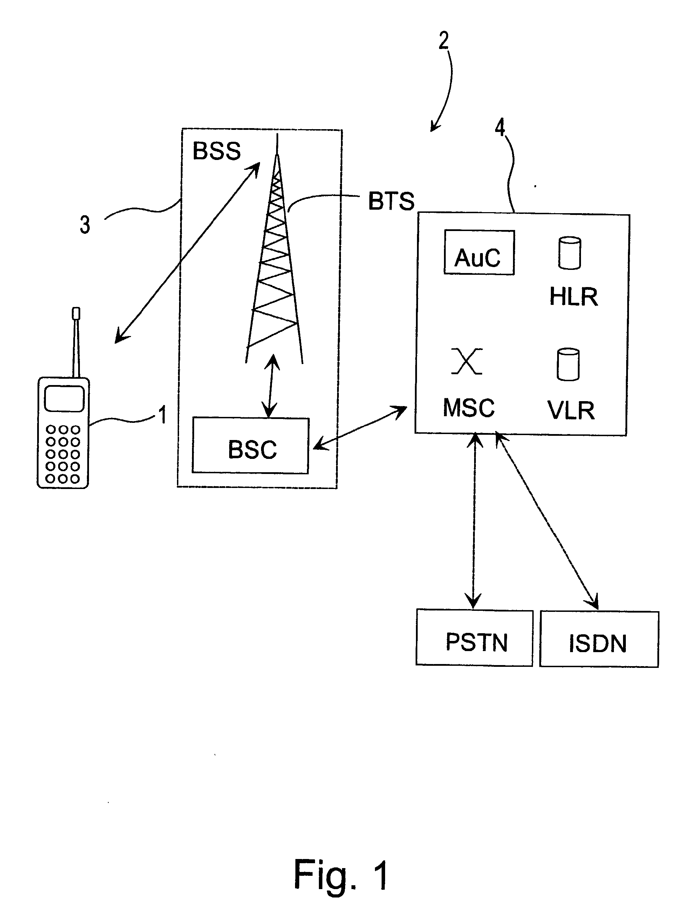

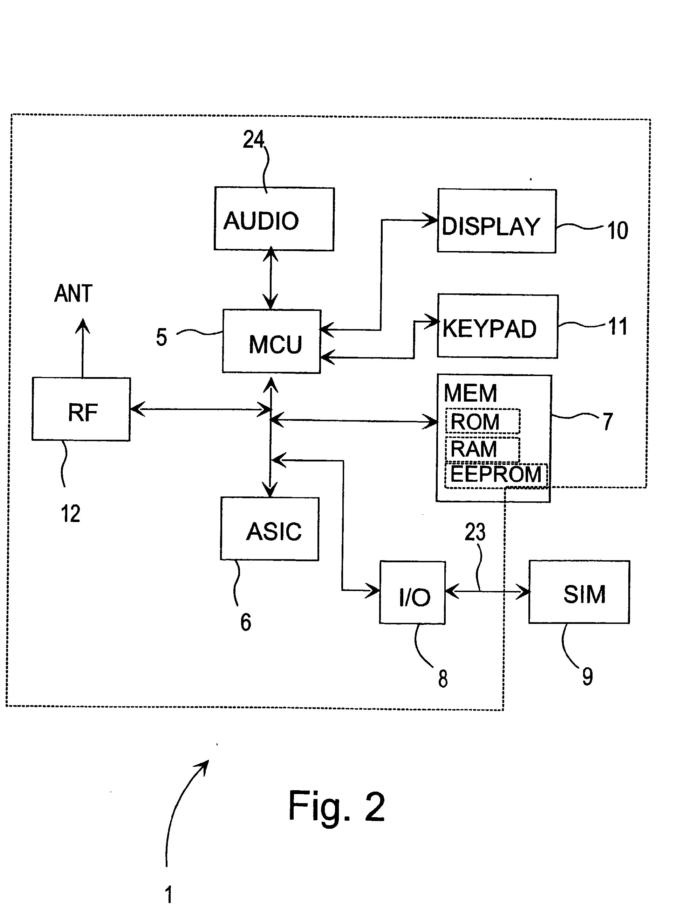

In the following, the invention will be described in a system shown in Fig. 1, comprising at least one wireless communication device 1 and a mobile communication network 2. However, the invention is not limited solely to wireless communication devices and a mobile communication network, but the invention can also be applied in connection with other communication devices and communication systems in which an identification card is used for user identification. The mobile communication network 2 comprises one or several base station subsystems 3 as well as one or several mobile services switching centres 4. Figure 2 shows, in a simplified block chart, an example of a wireless communication device 1 which can be used in the system of Fig. 1. Normally, the use of the wireless communication device 1 requires that a SIM card or a corresponding identification card 9 is placed in a connector (not shown) provided for this purpose in the wireless communication device 1. Thus, the wireless communication device 1 can read information stored on the SIM card. If the SIM card is not in its place or it is damaged or the data cannot be read for another reason, the wireless communication device 1 can normally not be used for calling, except for possibly calling a predetermined special number, such as an emergency number.

The control electronics of the wireless communication device preferably comprises a microcontroller unit 5 (MCU), an application specific integrated circuit 6 (ASIC), as well as a memory 7 (MEM). The memory 7 preferably comprises a read-only memory (ROM) *e.g.* for storing application software, a random access memory (RAM) for storing possibly variable data required during the use, and an electrically erasable programmable read-only memory (EEPROM) for storing various setting data. It is known as such that the electrically erasable programmable read-only memory can also be used for storing variable data and parts of an application program code. The application specific integrated circuit 6 can be used to form a majority of the logical couplings of the wireless communication device 1, including address coding. By means of the address coding, the microcontroller can control the different functional blocks of the wireless communication device 1, such as the memory 7 and a bus adapter 8 (I/O). Furthermore, the wireless communication device 1 of Fig. 2 preferably comprises at least a display 10, a keypad 11 and audio means 24.

The transmission and reception of radio-frequency signals takes place in a high-frequency block 12 (RF) which preferably comprises a transmitter, a receiver, a local oscillator, a modulator, and a demodulator, which are not presented in more detail in this description, because these are not essential in the description of the invention and are prior art known by anyone skilled in the art.

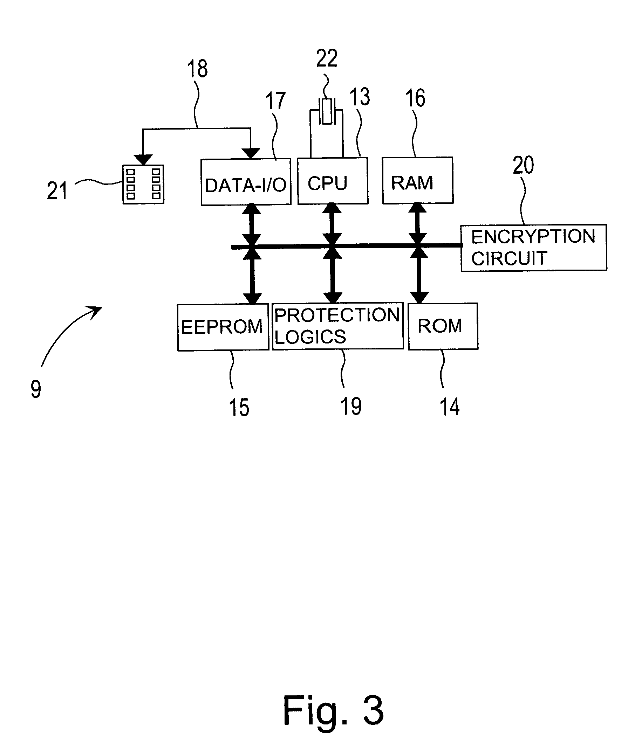

The SIM card 9 is typically manufactured by laminating, in plastic, a microcontroller and electronic circuits required in its operation. Furthermore, the surface of the card is normally equipped with electrical contacts, through which it is possible to transfer the operating voltages to the card and to transfer control and data signals between the card and the wireless communication device. Figure 3 shows the internal structure of a known SIM card 9 in a simplified block chart. A control unit 13 (CPU) controls the operation of the SIM card on the basis of a program code stored in a program memory 14 (ROM). A data memory 15 (EEPROM) can be used for storing various user-specific data that remains permanently in the memory. During the operation of the SIM card, the random access memory 16 (RAM) can be used as a temporary data storage. A bus adapter 17 (data I/O) for the SIM card adapts the internal bus of the SIM card 9 to a control and data line 18. The control and data line 18 is coupled to the connection pins 21 of the SIM card. In a corresponding manner, the wireless communication device 1 is equipped with connection lines 23 arranged to be coupled to the control and data lines 18 of the SIM card by means of these connection pins 21. Furthermore, to secure the safe use of the SIM card and to prevent abuse, the SIM card 9 is equipped with safety logics which preferably consists of protection logics 19 and an encryption block 20. It is thus possible to store on the SIM card 9 a personal identity number PIN which is checked by the protection logics 19 in connection with the use of the SIM card. The function of the encryption block 20 is *e.g.* the encryption of data transfer between the SIM card 9 and the wireless communication device 1. Preferably at the stage of manufacturing of the card, application software is stored in the program memory of the SIM card 9, for performing the functions required in connection with the wireless communication device.

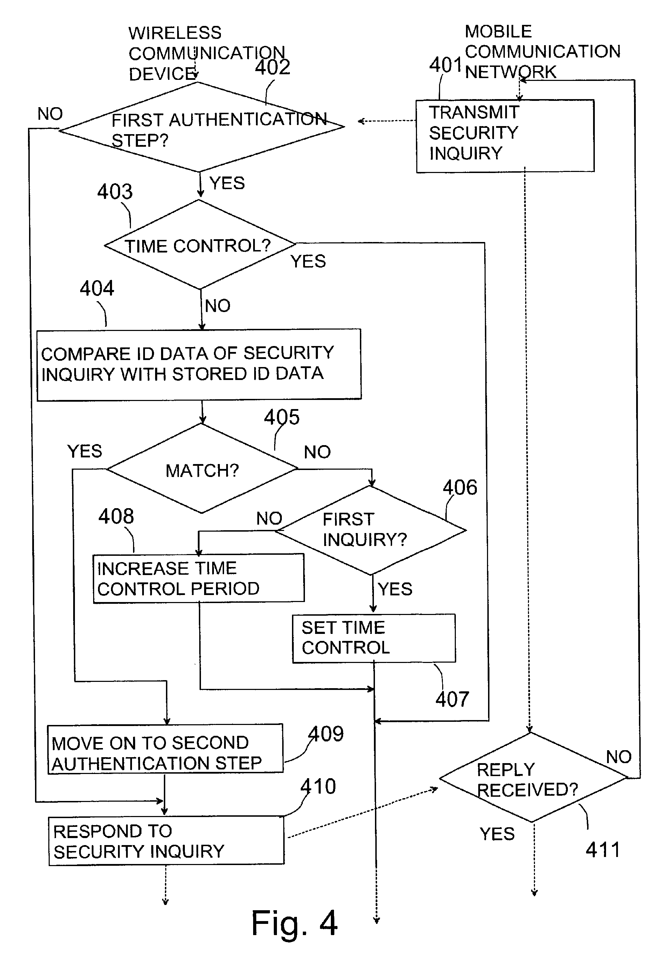

In the following, the operation of the method according to a preferred embodiment of the invention in the mobile communication system of Fig. 1 will be described with reference to the flow chart shown in Fig. 4. The wireless communication device 1 logs in the mobile communication network after the operating voltages have been coupled to the wireless communication device 1 and also after the wireless communication device 1 has, for one reason or another, been outside the range of the network and is again within the operating range of the network. An authentication center (AuC) generates a security inquiry message (block 401 in the flow chart of Fig. 4) and transmits it to that base station subsystem 3 of the mobile communication network within whose range the wireless communication device 1 is located at the moment. This security inquiry message contains *e.g.* a password calculated by a code known to the authentication centre and the wireless communication device 1. The wireless communication device 1 receives the security inquiry message. The security inquiry message is transmitted to the SIM card 9 which examines if it is an inquiry made in connection with login or an inquiry made after login (block 402). In this example situation, it is assumed that the wireless communication device has not logged in the mobile communication network at the moment; therefore, the SIM card control unit 13 determines that the inquiry message is related to login the mobile communication network. Thus, the operation of the first authentication block is started on the SIM card, if it has not already been started *e.g.* in connection with the processing of a previous security inquiry message. In practice, this first authentication block can be implemented by programming in the application software of the SIM card control unit 13. The first authentication block examines if time control is on (block 403). If time control has not been turned on, it is examined if the received, encoded password corresponds to the password stored on the SIM card 9 of the wireless communication device, by using an algorithm corresponding to that programmed on the SIM card 9 (block 404). If the password is incorrect (block 405) and time control is not on (block 406), i.e., this is the first security inquiry after the turning on of the operating voltages or after a disconnection of the connection to the mobile communication network for another reason, a timer or a corresponding time measuring function is started (block 407). The purpose of this is to measure a predetermined time and to prevent the processing of new inquiry messages within this time to be measured. The timer can be implemented *e.g.* as an interrupt service program by using the internal timer of the control unit 13, if the control unit 13 comprises such a function, a separate clock circuit (not shown) arranged on the SIM card, a program code made in the application software of the control unit 13, or in such a way that the timing calculation is implemented in the microcontroller 5 of the wireless communication device, from which the time data is transferred to the SIM card 9. The accuracy of the timing function depends, to some extent, on the implementation used at the time, such as the stability of the oscillator 22, but the absolute accuracy of this timing function is not very significant in view of applying the present invention. Furthermore, the practical application of this timing function is technology known by anyone skilled in the art, wherein its description in more detail will not be necessary in this context.

The wireless communication device 1 preferably replies to the security inquiry message (block 410) only in such a situation in which the password matches. If the transmitter of the security inquiry message is not a true mobile communication network but *e.g.* an artificial network trying illegally to determine the user data, it will transmit another security inquiry message, if the wireless communication device 1 does not transmit a reply to the previous inquiry within a predetermined time (blocks 411 and 401). In this case, the wireless communication device 1 receives the security inquiry message and transfers it to the SIM card for processing. Thus, the processing of the inquiry message on the SIM card 9 of the wireless communication device still takes place in the first authentication block, wherein it is first examined if the started timer has reached the set timing period (block 403). If the set timing period has not elapsed yet, the first authentication block will wait until the end of this timing period until the inquiry message is processed in the first authentication block. Thus, in the wireless communication device 1 according to the invention, the processing of the security inquiry message is delayed. If the password does not match even this time, the timer is started again. The countdown time of the timer is preferably increased in connection with an attempt to restart (block 408), wherein the delay in the processing of the security message is increased as the number of false security inquiry messages increases. As a result, the artificial network will not be capable of performing massive inquiry operations very fast, wherein it will be significantly more difficult to find out the user data when compared with solutions of prior art. Furthermore, in the method according to a preferred embodiment of the invention, the user of the wireless communication device 1 can be informed of false security inquiry messages. Thus, the user of the wireless communication device can take the necessary measures to interrupt the trespassing attempt *e.g.* by turning off the wireless communication device. If necessary, the wireless communication device 1 can also be turned off automatically, wherein trespassing attempts can be interrupted even if the user would not perceive a notification by the wireless communication device 1 on the trespassing attempts. Furthermore, the operator of the mobile communication network 2 can be informed of such trespassing attempts, wherein the operator can take measures to determine the location of the artificial network and stop its operation.

In a situation in which the wireless communication device 1 finds that the password is correct, the login of the wireless communication device 1 in the mobile communication network 2 is started. Thus, on the SIM card of the wireless communication device 1, the second authentication block is set in operation (block 409), operating normally in view of the login functions and inquiry functions of the mobile communication network in question. In one mobile communication network, the login preferably comprises the following steps. The authentication center (AuC) generates a so-called authentication triplet and transmits it to the base station subsystem 3 of the mobile communication network within whose range the wireless communication device 1 is located at the moment. After this, the mobile communication network performs authentication of the wireless communication device by using these numbers of the authentication triplet. This authentication triplet preferably comprises a random number RAND generated by a random number generator, a reference number SRES (signed response), and a public encryption key Kc corresponding to a subscriber-specific encryption key Ki stored in the mobile communication system. The reference number SRES and the encryption key Kc are formed by the random number RAND by using algorithms A3 and A8. The algorithms A3 and A8 are secret algorithms which are only known to the SIM card and the mobile communication system. The properties of the algorithms A3 and A8 include for example that the subscriber-specific encryption key Ki cannot be easily determined even from a large number of authentication triplets RAND, SRES and Kc.

The second authentication block calculates a second reference number SRES' and a public key Kc by using corresponding algorithms A3 and A8 which are programmed on the SIM card 9. In addition, the random number RAND and the authentication key Ki stored on the SIM card are used for calculating these numbers SRES' and Kc. The calculated second reference number SRES' is transferred from the SIM card to the high-frequency block 12 of the wireless communication device to be transmitted to the mobile communication network 2. The wireless communication device 1 transmits the calculated second reference number SRES' to the mobile communication network 2 where a comparison is made between the reference number SRES calculated in the mobile communication network and the second reference number SRES' received from the wireless communication device. If the numbers match, the mobile communication network accepts the login of the wireless communication network and sets up a connection. If the numbers do not match, the mobile communication network will perform another attempt to login by transmitting a new identification request message to the wireless communication device 1.

In case the mobile communication network finds that the reference numbers SRES, SRES' match, it is possible to make and receive calls normally via the wireless communication device 1.

When applying the method of the invention, normal logging in the mobile communication network is not significantly delayed, because the mobile communication network knows the correct password and the security inquiry message can be accepted in the wireless communication device 1. Furthermore, the application of the method of the invention causes changes primarily in the application software of the SIM card and in the login functions of the mobile communication network which are preferably implemented in connection with the mobile services switching centre 4.

Although the invention has been described above primarily in connection with a SIM card, it is obvious that the invention can also be applied in connection with other identification cards 9 which are used particularly in wireless communication devices. As an example, money card applications should be mentioned, in which a wireless communication device is used by means of a mobile communication network and/or a short range wireless communication network (*e.g.* Bluetooth, wireless local area network WLAN) to load money on an identification card 9, for making payments, *etc.* Another example to be mentioned is recently developed personal identification cards which can be used *e.g.* in transactions with authorities, banks *etc.* by means of a computer and a wired and/or wireless communication network. In this case, the computer is used as a communication device by means of *e.g.* a modem. The computer is equipped with means for connecting the identification card.

It is obvious that the present invention is not limited solely to the above-presented embodiments, but it can be modified within the scope of the appended claims.

## Claims

1. A method for authentication in a communication device (1) in which identification data is stored in connection with the communication device, **characterized in that** the authentication is divided in at least two steps of authentication, wherein in the first authentication step, at least one security inquiry containing identification data of the communication device (1) is transmitted to the communication device (1), said identification data contained in the security inquiry is examined in the communication device (1) to find out if the identification data matches with the identification data stored in the communication device (1), wherein if the comparison shows that the identification data do not match, a time control is started, wherein the processing of the next security inquiry message transmitted to the communication device (1) is started after the expiry of said time control in the communication device (1), and that the second authentication step is only taken if the comparison shows that said identification data match.

2. The method according to claim 1, in which the communication device (1) is logged in a communication network, **characterized in that** the authentication is performed at least in connection with the logging of the communication device (1) in the communication network.

3. The method according to claim 1 or 2, **characterized in that** said time control is delayed an the increase in the number of such security inquiries in which the identification data do not match with the identification data stored in the communication device (1).

4. The method according to claim 1, 2 or 3, **characterized in that** the communication device used is a wireless communication device.

5. The method according to claim 4, **characterized in that** a SIM card (9) is used for storing the identification data in the wireless communication device.

6. A communication device (1) comprising means (9) for storing identification data, **characterized in that** the means (9) for storing identification data comprise means (13) for performing the authentication in at least two steps of authentication, wherein the communication device comprises means (12) for receiving at least one security inquiry containing identification data of the communication device (1) transmitted to the communication device (1) in the first authentication step; means (13, 15) for examining said identification data contained in the security inquiry to find out if the identification data matches with the identification data stored in the communication device (1); means (13, 22) for starting a time control if the comparison shows that the identification data do not match; and means (13) for starting the processing of the next security inquiry message transmitted to the communication device (1) after the finish of said time control in the communication device (1); and that the second authentication step is arranged to be taken only if the comparison shows that said identification data match.

7. The communication device (1) according to claim 6, **characterized in that** the means for starting the time control comprise means (13) for extending the time control period in the case of an increase in the number of such security inquiries in which the identification data do not match with the identification data stored in the communication device (1).

8. The communication device (1) according to claim 6 or 7, **characterized in that** the communication device (1) is a wireless communication device.

9. The communication device (1) according to claim 8, **characterized in that** the means (9) for storing identification data comprise a SIM card (9).

10. A communication system comprising at least one communication network (2) and a communication device (1) comprising means (9) for storing identification data, **characterized in that** the means (9) for storing identification data comprise means (13) for performing the authentication in at least two steps of authentication, wherein the communication device (1) comprises means (12) for receiving at least one security inquiry containing identification data of the communication device (1) transmitted to the communication device (1) in the first authentication step; means (13, 15) for examining said identification data contained in the security inquiry to find out if the identification data matches with the identification data stored in the communication device (1); means (13, 22) for starting a time control if the comparison shows that the identification data do not match; and means (13) for starting the processing of the next security inquiry message transmitted to the communication device (1) after the finish of said time control in the communication device (1); and that the second authentication step is arranged to be taken only if the comparison shows that said identification data match.

11. The communication system according to claim 10, comprising means (3, 4) for logging of the communication device (1) in a communication network, **characterized in that** the authentication is arranged to be performed at least in connection with the login of the communication device (1) in the communication network.

12. The communication system according to claim 10 or 11, **characterized in that** the communication network comprises at least one mobile communication network, and that the communication device (1) is a wireless communication device.

13. An identification card (9) comprising means (9) for storing identification data, **characterized in that** the means (9) for storing identification data comprise means (13) for performing the authentication in at least two steps of authentication, wherein the identification card (9) comprises means (18, 21) for receiving at least a security inquiry in the first authentication step, the security inquiry containing identification data of a communication device (1); means (13, 15) for examining said identification data contained in the security inquiry to find out if the identification data matches with the identification data stored in the communication device (1); means (13, 22) for starting a time control if the comparison shows that the identification data do not match; and means (13) for starting the processing of the next security inquiry message transmitted to the communication device (1) after the expiry of said time control in the communication device (1); and that the second authentication step is arranged to be taken only if the comparison shows that said identification data match.
